Europäisches Patentamt

European Patent Office

Office européen des brevets

(11) Publication number: **0 142 859**
**A2**

## (12) EUROPEAN PATENT APPLICATION

(21) Application number: **84114037.9**

(22) Date of filing: **20.11.84**

(51) Int. Cl.⁴: **B 01 D 53/36**
**B 01 J 23/44**

(30) Priority: **21.11.83 JP 217688/83**

(43) Date of publication of application:
**29.05.85 Bulletin 85/22**

(84) Designated Contracting States:
**DE FR GB**

(71) Applicant: **NISSAN MOTOR COMPANY, LIMITED**
No.2, Takara-cho, Kanagawa-ku
Yokohama-shi Kanagawa-ken 221(JP)

(72) Inventor: **Yoneshige, Tetsuhiko**
No. 614-9, Mutsuura-cho Kanazawa-ku
Yokohama City(JP)

(72) Inventor: **Masuda, Koji**
No. 3-68, Oppama-higashicho
Yokosuka City(JP)

(74) Representative: **Patentanwälte TER MEER - MÜLLER -
STEINMEISTER**
Mauerkircherstrasse 45
D-8000 München 80(DE)

(54) Catalytic purification of exhaust gas of internal combustion engine using lean mixture.

(57) A method of decreasing HC and CO contained in exhaust gas of an internal combustion engine, particularly an automotive gasoline engine, operated with a very lean mixture by contact of the exhaust gas in hot state with a monolithic catalyst comprising a monolithic carrier, which is provided with an active alumina base coating containing Ce or La in oxide form, and metallic Pd and/or Pt deposited on the coating. The total content of Pd and/or Pt in the catalyst is limited within the range from 0.043 to 0.43 wt%. It is suitable to form the coating by treating the monolithic carrier with a slurry containing a mixture of an active alumina powder containing 1–5 wt% of Ce or La and a powder of $CeO_2$ or $La_2O_3$ and baking the treated carrier, adjusting the amount of the ceria or lanthana powder such that Ce or La of this powder amounts to 5–50 wt% of the coating after baking. Despite the use of a relatively small quantity of the noble metal, high conversions of HC and CO are achieved even at relatively low exhaust gas temperatures.

# CATALYTIC PURIFICATION OF EXHAUST GAS OF INTERNAL COMBUSTION ENGINE USING LEAN MIXTURE

## BACKGROUND OF THE INVENTION

This invention relates to a method of decreasing hydrocarbons (HC) and carbon monoxide (CO) contained in exhaust gas of an internal combustion engine, particularly an automotive gasoline engine, by contact of the hot exhaust gas with a monolithic catalyst, which is of the type comprising palladium and/or platinum deposited on an active alumina base coating precedently provided to the monolithic carrier.

Various catalysts have been proposed and put into practical use for the purification of exhaust gases of internal combustion engines mounted on vehicles such as automobiles. In general, conventional catalysts for this purpose employ noble metals of the platinum group as the principal catalytic component. For automotive engines, monolithic catalysts are preferred to granular catalysts.

A popular way of producing an exhaust gas purifying monolithic catalyst is to first provide an active alumina base coating to the surfaces of a monolithic carrier formed of a ceramic material and then deposit platinum, palladium and/or rhodium on the active alumina coating. Usually the deposition of the selected noble metal(s) is accomplished by pyrolysis of a suitable compound of each noble metal applied to the coated carrier as an aqueous solution. For the purpose of improving the activity and/or durability of the catalyst, it is known to introduce cerium oxide (ceria) or lanthanum oxide (lanthana) into the active alumina base coating prior to the deposition of the noble metal(s) or, as an alternative method, to form ceria or lanthana on the coating after deposition of the noble metal(s).

Commercial automotive gasoline engines are mostly operated with a nearly stoichiometric mixture having an air to fuel ratio close to 14.7 by weight, and conventional exhaust gas purifying catalysts are principally so designed as to exhibit best conversion efficiencies in exhaust gases produced by combustion at such air/fuel ratio. However, recently developed "lean-burn" engines employ a very high air/fuel ratio ranging from about 19 to about 27 primarily with a view to greatly improving the fuel economy. In the lean-burn engines the exhaust gas temperature at the position of the catalytic treatment becomes lower than in the cases of using a nearly stoichiometric mixture by about 100°C. Such lowering in the exhaust gas temperature is considered to be favorable for durability of the exhaust gas purifying catalysts. However, the activity of the catalysts lowers at the lowered exhaust gas temperatures and this tendency becomes significant after the catalysts being heated for a long time. Furthermore, in the exhaust gases of the lean-burn engines HC are present in relatively high concentrations so that satisfactory conversion of HC by conventional exhaust gas purifying catalysts is difficult.

SUMMARY OF THE INVENTION

It is an object of the present invention to provide an efficient method of catalytically decreasing HC and CO contained in the exhaust gas of a so-called lean-burn engine.

The present invention provides a method of catalytically decreasing HC and CO contained in exhaust gas of an internal combustion engine in which the ratio of air to fuel is in the range from 19 to 27 by weight, the method having the step of bringing the exhaust gas in hot state into contact with a monolithic catalyst comprising a monolithic carrier, which is provided with an active alumina base coating containing a rare earth element selected from Ce and La in oxidized state, and at least one noble metal selected from Pd and Pt deposited on the coating in metallic state, and the method being characterized in that the total content of Pd and/or Pt in the catalyst is in the range from 0.043 to 0.43% by weight.

Concerning exhaust gases of automotive internal combustion engines which employ very high air/fuel ratios ranging from 19 to 27, we have discovered and confirmed that satisfactory conversions of HC and CO can surely be accomplished by using a monolithic catalyst in which the content of Pd. and/or Pt deposited on the aforementioned coating is relatively small as specified above.

In a catalyst for use in the present invention it is suitable that the content of Ce or La (calculated as metal) in the active alumina base coating is 5 to 55 wt%. More particularly it is preferable to form the coating by treating a monolithic carrier for use in conventional exhaust gas purifying catalysts with a slurry containing a mixture of active alumina containing 1-5 wt% of Ce or La and a powder of $CeO_2$ or $La_2O_3$ and baking the treated carrier, while controlling the amount of the ceria or lanthana powder such that Ce or La of this powder amounts to 5-50 wt% of the completed coating. When used in less amounts the effects of ceria or lanthana remain insufficient. On the other hand, the use of larger amounts of ceria or lanthana does not produce proportionate augmentation of effects. The deposition of Pd and/or Pt on the active alumina base coating can be accomplished by a well known pyrolysis method. By producing a monolithic catalyst in this manner, it is possible to make the catalyst contain a relatively large amount of ceria or lanthana without obstructing good dispersion of Pd and/or Pt on the surfaces of the catalyst.

The method according to the invention is highly effective in decreasing HC and CO in the exhaust gases of the lean-burn engines, easy to practical applications and relatively inexpensive. The catalyst used in this invention is high in activity even at relatively low exhaust gas temperatures and exhibits good endurance even when tested at temperatures far higher than the expected exhaust gas temperature.

BRIEF DESCRIPTION OF THE DRAWINGS

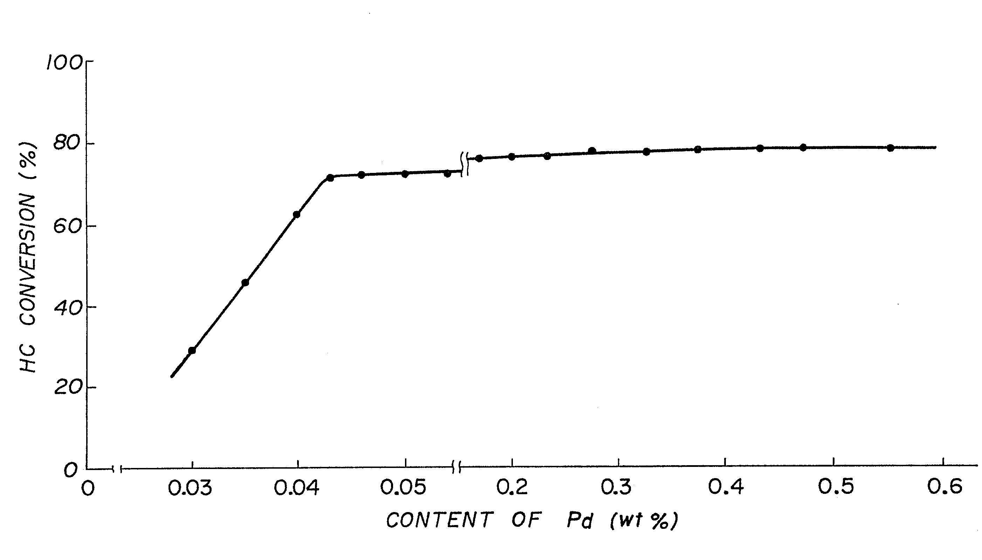

The single Figure is a graph showing the relationship between the content of Pd in a monolithic catalyst of the above described type and the HC conversion in the exhaust gas of a lean-burn engine.

DESCRIPTION OF THE PREFERRED EMBODIMENTS

In a catalyst for use in this invention the monolithic carrier does not differ from ones for conventional exhaust gas purifying catalysts used in automobiles. That is, the monolithic carrier is a generally cylindrical member of a compound metal oxide or ceramics having a honeycomb structure, though the cells need not be hexagonal in cross-section.

A preferred material of the monolithic carrier is cordierite. Usually the monolithic carrier is about 500-1000 cm$^3$ in gross volume and about 400-600 g in weight and has about 250-400 cells per square inch of cross-sectional area defined by walls of about 5-15 mils thickness. When the gross volume of the monolithic carrier is about 900 cm$^3$, the weight of the carrier is about 470-530 g.

It is known to provide an active alumina base coating containing ceria or lanthana to a monolithic carrier by first coating the carrier surfaces with active alumina alone, next applying an aqueous solution of a salt such as cerium nitrate or lanthanum nitrate to the coated carrier and then baking the carrier to cause thermal decomposition of the salt to ceria or lanthana. However, in this invention it is preferred to employ the above described coating method using a Ce- or La-containing active alumina powder and either a ceria powder or a lanthana powder. An active alumina powder containing Ce or La in oxide form can be obtained by a known way. For example, beads of active alumina are impregnated with a solution of cerium nitrate or lanthanum nitrate and, after drying, baked in air. The thus treated active alumina beads are pulverized either before or after mixing with a ceria powder or a lanthana powder. As the rare earth element in the coating, we prefer Ce to La.

The coating liquid for application to the monolithic carrier may contain a ceramic filler or extender material such as alumina besides the essential Ce- or La-containing alumina powder and either ceria powder or lanthana powder. It is convenient to use an aqueous alumina sol containing boehmite or hydrated alumina as the liquid medium for preparing the coating liquid.

After the application of the coating liquid and sufficient drying, the monolithic carrier is baked in air usually at a temperature in the range from about $500^{\circ}C$ to about $700^{\circ}C$ to thereby obtain an active alumina base coating which contains ceria or lanthana and firmly adheres to the carrier surfaces.

The deposition of Pd or Pt, or both, on the active alumina base coating is accomplished by a well known thermal decomposition method using an aqueous solution of a suitable compound or compounds of the noble metal(s). The oxide-coated monolithic carrier is immersed in the solution, dried and then baked in air or steam at a temperature in the range from about $500^{\circ}C$ to about $700^{\circ}C$. The quantity of Pd or Pt to be deposited on each monolithic carrier can be controlled primarily by regulating the concentration of the noble metal compound solution. In this invention we prefer Pd to Pt.

The total content of Pd and/or Pt is limited within the range from 0.043 to 0.43 wt%. It is not always possible to accomplish sufficiently high conversions of HC and CO by using a catalyst containing less the 0.043 wt% of Pd and/or Pt. On the other hand, the use of more than 0.43 wt% of Pd and/or Pt does not lead to proportionate enhancement of the HC and CO conversions.

The single Figure of the accompanying drawing shows an example of experimental results as to this matter. In the experiment, many sample catalysts different only in the content of Pd were produced by using the materials and production method described hereinafter in Example 1. In every sample catalyst the total content of Ce in the active alumina base coating was 5.8 wt%, and Ce of the ceria powder used in preparing the coating liquid amounted to 5.0 wt% of the coating. The sample catalysts were tested in a synthesized exhaust gas which was nearly equivalent to the exhaust gas of an automotive gasoline engine operated at an air/fuel ratio of 20. The exhaust gas temperature at the inlet to each catalyst was 350°C. As can be seen in the Figure, the conversion of HC was at a sufficiently high level when the catalysts contained at least 0.043 wt% of Pd. Though not illustrated, almost the same tendency was observed as to the conversion of CO. Also in analogous experiments wherein the content of Ce in the coating was varied or Pt was used in place of Pd, there was little variation in the manner of dependence of the HC and CO conversions on the content of the noble metal in the catalyst.

The catalysts for use in the present invention will further be illustrated by the following nonlimitative examples.

EXAMPLE 1

First, cerium was introduced into beads of active alumina about 2-4 mm in diameter (SCS-79 of Rhone-Poulenc S.A., France) by immersing the active alumina beads in an aqueous solution of cerium nitrate and, after drying, baking the treated beads in air at 600°C for 1 hr. In this case the impregnation process was controlled such that the content of Ce, which was existing in oxidized state, in the baked active alumina beads became 1 wt%.

Next, a slurry-like mixture was prepared by dispersing 1419 g of the Ce-containing active alumina beads and 103.2 g of a commercial ceria powder in 2478.0 g of an alumina sol which was obtained by adding 10 wt% of $HNO_3$ to an aqueous suspension containing 10 wt% of boehmite alumina powder. In a ball mill the slurry-like mixture was thoroughly mixed and ground for 6 hr to obtain an aqueous suspension of an alumina base fine powder mixture. Hereinafter, a suspension prepared in this manner will be called a coating liquid.

The coating liquid was applied to a monolithic honeycomb carrier formed of cordierite. The monolithic carrier was cylindrical in appearance and had a gross volume of 900 $cm^3$. The carrier had 300 cells per square inch of cross-sectional area in the fashion of parallel and cross-sectionally square flow passages defined by walls of 12 mils thickness. After draining and drying the thus treated monolithic carrier was baked in air at 650°C for 2 hr. The coating process was performed such that the weight of the coating on each monolithic carrier became 160 g after baking. In this coating the total content of Ce was 5.8 wt%, and Ce of the ceria powder used as an ingredient of the coating liquid amounted to 5 wt% of the baked coating.

The thus coated monolithic carrier was immersed in an aqueous solution of palladium chloride, dried and then baked in air at 600°C for 1 hr to thereby deposit metallic palladium on the oxide-coated monolithic carrier. The catalyst produced in this way contained 0.043 wt% of Pd. In this catalyst the specific surface area of the deposited Pd was measured to be 0.110 $m^2$/g by the CO adsorption method.

EVALUATION TEST

The activity and endurance of the monolithic catalyst produced in Example 1 were evaluated by the following test method.

First, the catalyst was kept heated at 85°C in air for a total period of 100 hr as an endurance test. After that the catalyst was disposed in a simulated exhaust passage through which a synthesized exhaust gas was passed to examine the HC and CO conversion efficiencies of the catalyst. The gas temperature at the inlet to the catalyst was 350°C, and the space velocity of the gas was 60000 $hr^{-1}$. The composition of the gas was as follows and was corresponding to the exhaust gas of an automotive gasoline engine operated at an air/fuel ratio of about 20.

| | | | |
|------|-----------|---------|-----------|
| CO | 0.50 wt% | $O_2$ | 6 wt% |
| $H_2$ | 0.17 wt% | $CO_2$ | 8 wt% |
| $C_2H_4$ | 0.20 wt% | $H_2O$ | 9 wt% |
| $C_3H_8$ | 0.07 wt% | $N_2$ | balance |
| NO | 400 ppm | | |

The HC and CO conversions of the catalyst were as shown in Table 1.

The catalysts produced in the following examples were also tested by the same method. The test results are shown in Table 1 together with the particulars of the respective catalysts.

EXAMPLE 2

A monolithic catalyst was produced in accordance with Example 1 except that the amount of the ceria powder in the coating liquid was increased and that the content of Pd in the catalyst was increased to 0.235 wt%.

## EXAMPLE 3

A monolithic catalyst was produced in accordance with Examples 1 and 2 except that the amount of the ceria powder in the coating liquid was further increased and that the content of Pd in the catalyst was increased to 0.43 wt%.

## EXAMPLES 4-6

In these examples the active alumina beads (SCS-79) were treated so as to contain 3 wt% of Ce. Otherwise, Examples 4, 5 and 6 were identical with Examples 1, 2 and 3, respectively.

## EXAMPLES 7-9

In these examples the active alumina beads (SCS-79) were treated so as to contain 5 wt% of Ce. Otherwise, Examples 7, 8 and 9 were identical with Examples 1, 2 and 3, respectively.

## EXAMPLE 10

In this example the active alumina beads (SCS-79) were treated with an aqueous solution of lanthanum nitrate and then baked so as to contain 1 wt% of La, and lanthana powder was used in place of ceria powder in preparing the coating liquid. As a further modification of the process of Example 1, an aqueous solution of chloroplatinic acid was used in place of the palladium chloride solution to obtain a monolithic catalyst containing 0.043 wt% of Pt.

## EXAMPLE 11

The active alumina beads (SCS-79) were treated so as to contain 3 wt% of La, and an aqueous solution of palladium chloride was used to obtain a monolithic catalyst containing 0.235 wt% of Pd. Otherwise, this example was identical with Example 10.

For comparison the following catalysts were subjected to the aforementioned test. The test results are shown in Table 1 together with the particulars of the respective catalysts.

REFERENCE 1

The active alumina beads (SCS-79) were treated so as to contain 6 wt% of Ce. A coating liquid was prepared by mixing 1419 g of the Ce-containing active alumina beads with 2478 g of the alumina sol mentioned in Example 1 and grinding the mixture as in Example 1.

Using this coating liquid, the process of providing an active alumina base coating to the monolithic carrier and depositing palladium thereon described in Example 1 was identically performed. The coating on each monolithic carrier weighed 160 g (after baking) and contained 5.8 wt% of Ce. In the thus produced catalyst the specific surface area of the deposited Pd was measured to be 0.057 $m^2/g$.

REFERENCE 2

A coating liquid was prepared by mixing 1419 g of the active alumina beads (SCS-79, not containing Ce) with 2478 g of the alumina sol mentioned in Example 1 and grinding the mixture by the method described in Example 1. Using this coating liquid the monolithic carrier used in Example 1 was provided with an active alumina base coating (160 g after baking), and palladium was deposited on the coated carrier by the same process as in Example 1. After that, the Pd-carrying monolithic carrier was immersed in an aqueous solution of cerium nitrate, dried and then baked to thereby obtain a catalyst containing 0.043 wt% of Pd and such an amount of ceria that Ce amounted to 5.8 wt% of the oxide coating. In this catalyst the specific surface area of the deposited Pd was measured to be 0.068 $m^2/g$.

REFERENCE 3

A monolithic catalyst was produced by the process of Example 1 with modifications in the following points.

The active alumina beads (SCS-79) were treated so as to contain 0.5 wt% of Ce, and the composition of the coating liquid was varied such that Ce of the ceria powder used in preparing the coating liquid amounted to 3 wt% of the active alumina base coating. The content of Pd in the catalyst was decreased to 0.040 wt%.

REFERENCE 4

A monolithic catalyst was produced by the process of Example 1 with modifications in the following points.

The active alumina beads (SCS-79) were treated so as to contain 7 wt% of Ce, and the composition of the coating liquid was varired such that Ce of the ceria powder used in preparing the coating liquid amounted to 55 wt% of the active alumina base coating. The content of Pd in the catalyst was increased to 0.47 wt%.

On the catalysts of Examples 1 and 9 and References 1, 3 and 4, the evaluation test was supplemented by measuring the HC and CO conversions in a differently composed synthetic exhaust gas which was corresponding to the exhaust gas of an automotive gasoline engine operated at an air/fuel ratio of about 24. The gas temperature at the inlet to the catalyst was 350°C, and the space velocity of the gas was 60000 $hr^{-1}$. The gas composition was as follows. The results of the supplemental test are also shown in Table 1.

| | | | |
|---|---|---|---|
| CO | 0.15 wt% | $O_2$ | 9 wt% |
| $H_2$ | 0.05 wt% | $CO_2$ | 7.5 wt% |
| $C_2H_4$ | 0.24 wt% | $H_2O$ | 9 wt% |
| $C_3H_8$ | 0.08 wt% | $N_2$ | balance |
| NO | 100 ppm | | |

Table 1

| Catalyst | Ce(or La) in Alumina Beads (wt%) | Ce(or La) Originated in Ceria (Lanthana) Powder (wt%) | Total Ce (or La) in Coating (wt%) | Pd(or Pt) (wt%) | Conversions (%) | | | |
|---|---|---|---|---|---|---|---|---|
| | | | | | A/F=20 | | A/F=24 | |
| | | | | | HC | CO | HC | CO |
| Ex. 1 | 1 | 5 | 5.8 | 0.043 | 71 | 86 | 70 | 87 |
| Ex. 2 | 1 | 30 | 30.8 | 0.235 | 74 | 88 | | |
| Ex. 3 | 1 | 50 | 50.8 | 0.43 | 76 | 89 | | |
| Ex. 4 | 3 | 5 | 7.5 | 0.043 | 73 | 87 | | |
| Ex. 5 | 3 | 30 | 32.5 | 0.235 | 77 | 90 | | |
| Ex. 6 | 3 | 50 | 52.5 | 0.43 | 80 | 92 | | |
| Ex. 7 | 5 | 5 | 9.2 | 0.043 | 75 | 88 | | |
| Ex. 8 | 5 | 30 | 34.2 | 0.235 | 79 | 92 | | |
| Ex. 9 | 5 | 50 | 54.2 | 0.43 | 83 | 94 | 83 | 95 |
| Ex. 10 | (La: 1) | (La: 5) | (La: 5.8) | (Pt: 0.043) | 70 | 85 | | |
| Ex. 11 | (La: 3) | (La: 5) | (La: 7.5) | 0.235 | 72 | 86 | | |
| Ref. 1 | 6 | - | 5.8 | 0.043 | 63 | 77 | 61 | 77 |
| Ref. 2 | 0 | - | 5.8 | 0.043 | 62 | 75 | | |
| Ref. 3 | 0.5 | 3 | 3.4 | 0.040 | 61 | 72 | 59 | 71 |
| Ref. 4 | 7 | 55 | 60.9 | 0.47 | 83 | 94 | 83 | 95 |

-14-

On the catalysts of Example 1 and References 1 and 2, the 100 hr heating at 850°C prior to the conversion efficiency test caused changes in the specific surface area of Pd as shown in Table 2.

Table 2

| Catalyst | Specific Surface Area of Pd ($m^2$/g) | |
|----------|------------------|----------------|
| | before heating | after heating |
| Ex. 1 | 0.110 | 0.037 |
| Ref. 1 | 0.057 | 0.016 |
| Ref. 2 | 0.068 | 0.013 |

WHAT IS CLAIMED IS:

1.   A method of catalytically decreasing hydrocarbons and carbon monoxide contained in exhaust gas of an internal combustion engine in which the ratio of air to fuel is in the range from 19 to 27 by weight, the method having the step of bringing the exhaust gas in hot state into contact with a monolithic catalyst comprising a monolithic carrier, which is provided with an active alumina base coating containing a rare earth element selected from the group consisting of Ce and La in oxidized state, and at least one noble metal selected from the group consisting of Pd and Pt deposited on the coating in metallic state,
     characterized in that the total content of said at least one noble metal in said catalyst is in the range from 0.043 to 0.43% by weight.

2.   A method according to Claim 1, wherein said coating is formed by treating said monolithic carrier with a slurry containing a mixture of an active alumina powder which contains said rare earth element and a powder of an oxide of said rare earth element and baking the treated monolithic carrier.

3.   A method according to Claim 2, wherein the content of said rare earth element in said active alumina powder is in the range from 1 to 5 wt%, said rare earth element of said powder of the oxide amounting to 5 to 50 wt% of said coating.

4.   A method according to Claim 3, wherein said rare earth element is Ce and said at least one noble metal is Pd alone.

5.    A method according to Claim 1, wherein said monolithic carrier is made of cordierite and has a honeycomb structure.

6.    A method according to Claim 1, wherein said engine is an automotive gasoline engine.

EP 136-84

0142859

1/1